**Europäisches Patentamt**

**European Patent Office**

**Office européen des brevets**

(19)

(11) Numéro de publication : **0 466 614 A2**

(12)

# DEMANDE DE BREVET EUROPEEN

(21) Numéro de dépôt : **91420214.8**

(51) Int. Cl.⁵ : **B29C 65/02, B30B 5/02**

(22) Date de dépôt : **28.06.91**

(30) Priorité : **28.06.90 FR 9008436**

(43) Date de publication de la demande : **15.01.92 Bulletin 92/03**

(84) Etats contractants désignés :
**BE CH DE ES FR GB IT LI NL**

(71) Demandeur : **Jaubert, Maurice Pierre**
**La Pichardie, Sain-Méard de Dronne**
**F-24600 Riberac (FR)**

(72) Inventeur : **Jaubert, Maurice Pierre**
**La Pichardie, Sain-Méard de Dronne**
**F-24600 Riberac (FR)**

(54) **Presse a structure allegee pour jonctionnement de courroies.**

(57)     Dispositif destiné à assurer le jonctionnement par vulcanisation, polymérisation ou thermofusion des courroies transporteuses et de transmission.

L'invention concerne un dispositif permettant de réaliser une presse à jonctionner caractérisée en ce que les contraintes mécaniques générées par la mise en pression de la presse sont contenues par une enceinte souple 11 et 12 et les plateaux presseurs chauffants 13.

Le dispositif est constitué par une enceinte souple de plateaux 13 de vessies 17, de blocs de transmission 16 et de dispositifs d'isolation thermique 14 et 15.

Le dispositif selon l'invention permet d'obtenir par rapport aux constructions de presses déjà connues un gain pondéral important.

EP 0 466 614 A2

FIG 1

La présente invention concerne une presse portative destinée à réaliser, sur chantier ou en atelier, des opérations de jonctionnement de bandes transporteuses ou de courroies de transmission, par vulcanisation, polymérisation, thermofusion ou collage.

Ces opérations nécessitent une certaine pression, en général, de 0 à 12 bars, et parfois, la conjugaison d'une certaine température de 100 à 200° C.

Ces presses sont actuellement constituées de traverses rigides, lourdes et encombrantes, reliées entre elles à leurs extrémités, formant ainsi une enceinte à l'intérieur de laquelle se trouvent les plateaux presseurs, ainsi qu'un système générateur de pression.

Dans le cas particulier, le document PATENT ABSTRACT OF JAPAN, VOL 10, N° 272 (M-518) (2329), 17 SEPTEMBRE 1986 et JP.A. 6198529 BRIDGESTONE CORP. 15 MAI 1986, décrit un appareil de pressage comportant deux plaques rigides en alliage d'aluminium ancrées à chacune de leurs extrémités définissant une enceinte munie de deux vessies entre lesquelles sont insérées les bandes à rabouter. Une fois gonflées, les vessies assurent une pression directe sur la bande.

Aucun bloc de transmission d'effort n'est décrit, et, il n'apparaît pas que le système permettant de contenir les contraintes mécaniques générées par l'appareil soit ramené uniquement à la présence sur le polygone funiculaire des efforts de traction d'une enceinte résistante souple, et, l'utilisation des plateaux presseurs pour assurer la retenue des forces de compression comme le permet l'objet de l'invention.

Le fonctionnement de cet appareil connu, n'utilisant pas le système selon l'invention, ci-dessus, implique que l'enceinte contenant les contraintes mécaniques soit rigidifiée suffisamment, ce qui a pour conséquence la création d'une surcharge pondérale préjudiciable à la bonne utilisation de ces appareils.

De plus, la majorité des opérations de vulcanisation, par fusion ou par polymérisation, nécessite un apport de chaleur généralement incompatible avec l'utilisation fiable de joints ou vessies en élastomère. Des dispositifs efficaces d'isolation thermique de ces éléments sont donc nécessaires. De même que la durée de service d'une vessie est inversement proportionnelle à l'importance des déformations qui lui sont imposées, il importe que des dispositions soient prises pour limiter, au minimum, leur expansion lors de la mise en pression. L'invention vise à pallier à ces inconvénients.

L'invention concerne donc une presse REVENDICATION 1.

Les figures illustrent un exemple de réalisation de l'invention.

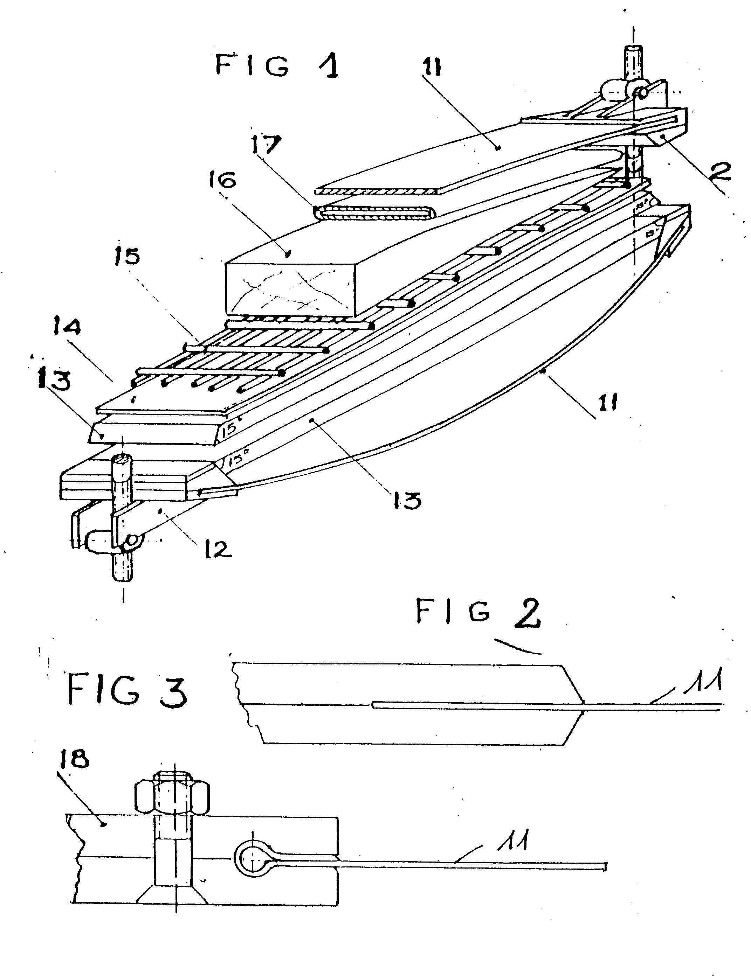

La FIG 1 représente une vue éclatée de la presse dans sa version symétrique. Les figures 2 et 3 montrent des modes de liaison de la nappe au dispositif d'assemblage.

L'appareil suivant l'invention, FIG. 2, comporte plusieurs plateaux presseurs 13, deux transmetteurs d'effort 16 et deux générateurs 17, une enceinte souple comportant deux nappes 11 et deux dispositifs d'assemblage 12.

L'appareil est caractérisé par le fait que les contraintes mécaniques générées par la mise en pression de la presse sont contenues par une enceinte souple 11 et 12 qui se positionne naturellement sur le polygone funiculaire des contraintes de traction alors que celles de compression prennent appui sur les extrémités des plateaux.

L'enceinte souple est réalisée par deux nappes 11 de matériaux à haute limite élastique, supérieure à 70 daN/mm$^2$ tels que feuilles ou chaînes d'acier, câbles d'acier ou fibre synthétique, ou matériaux composites. Ces deux nappes sont associées l'une à l'autre par deux dispositifs d'assemblage 12, eux-mêmes liés aux nappes par un procédé caractérisé par le fait qu'il ne crée pas de perte de résistance aux points de liaison.

Le procédé retenu est le collage (FIG. 2) ainsi que le pinçage mécanique (FIG. 3) par deux demi coquilles 18, d'une excroissance sur matériau moulé tel que composite ou nappe de câbles.

Chaque dispositif d'assemblage 12 comporte une vis à pas contraire agissant sur deux noix qui viennent s'ancrer sur les crochets disposés aux extrémités des nappes constituant les deux éléments de l'enceinte souple.

Cette disposition permet un montage rapide de l'appareil.

Les extrémités des plateaux 13 constituent des surfaces d'appui sur lesquelles les dispositifs d'assemblage 12 transmettent aux plateaux 13 les contraintes de compression. Les surfaces de ces extrémités sont caractérisées par le fait qu'elles sont inclinées entre 50 et 85°, 75° de préférence par rapport au plan des plateaux 13, permettant ainsi le centrage permanent de l'enceinte quel que soit le niveau de dilatation linéaire de ces plateaux.

Selon une variante, les transmetteurs d'effort 16 et les plateaux presseurs 13 sont constitués d'un seul bloc. Selon un autre mode de réalisation, les plateaux presseurs 13 sont chauffants et sont parfois séparés des transmetteurs d'effort 16 par des dispositifs d' isolation thermique 14 et 15.

Le dispositif d'isolation thermique 14 et 15 est caractérisé par l'utilisation d'une plaque d'isolant conventionnel 14, il peut être associé à une grille 15 qui ménage des couloirs de circulation d'air entre le plateau chauffant et le transmetteur d'effort dans le sens longitudinal et transversal du fait que les fils longitudinaux et transversaux constituant cette grille sont superposés, diminuant ainsi considérablement les surfaces de transfert de chaleur entre les plateaux chauffants munis de leur dispositif d'isolation thermique et les autres masses de la presse.

Les générateurs d'effort 17 sont constitués par des vessies 17 couvrant la surface du transmetteur, et, contiennent un fluide mis sous pression par une source extérieure ou par rapprochement des nappes constituant l'enceinte souple.

La présence des blocs de transmission 16 permet, en plus, d'éloigner les vessies 17 des sources de chaleur. La température, au niveau des vessies, reste de ce fait compatible avec la résistance à la chaleur de leurs constituants, c'est-à-dire, inférieure à 80° C. Leur durée de vie s'en trouve considérablement augmentée.

Les blocs de transmission 16 peuvent être réalisés en tous matériaux légers susceptibles de supporter des efforts de compression.

Selon un exemple de réalisation : presse chauffante de surface utile 600 mm X 140 mm ; pression d'utilisation: 6 bars. Température contrôlée de 20 à 200° C. Poids de l'ensemble : 2 fois 14 KG. soit 28 KG. Destination : jonctionnement et réparation des bandes transporteuses ou courroies de transmission en P.V.C., polyuréthane ou élastomère.

Son utilisation permet d'obtenir un allègement des besoins en personnel, en transport et en moyens de levage nécessaires à l'exécution des travaux cités ci-dessus.

L'opération de jonctionnement consiste à placer sous la jonction préparée de la bande la partie inférieure de la presse, au dessus, la partie supérieure, relier les deux extrémités par le système de noix et vis à pas contraire, amener les parties en contact en tournant les vis, mettre en oeuvre le générateur de pression à la valeur souhaitée, mettre les plateaux presseurs chauffants sous tension électrique, ou bien, y faire circuler un fluide chaud à la température adéquate.

La presse, ci-dessus décrite, comporte une symétrique par rapport à son plan médian passant par celui des éléments à jonctionner.

Selon une variante, la presse disymétrique, comportant une nappe, un générateur d'effort, un bloc transmetteur d'effort, un plateau presseur et un contre-bloc, la nappe se fixant sur un contre-bloc, avec ou sans moyen de chauffage, donne également satisfaction.

## Revendications

1 - Presse portative destinée à réaliser, sur chantier ou en atelier, des opérations de jonctionnement, et, constituée d'une enceinte souple comportant, au moins, une nappe 11 caractérisée en ce qu'elle comporte, au moins, un transmetteur d'effort 16 et un générateur d'effort 17 constitués par une vessie 17 qui couvre la surface du transmetteur et qui contient un fluide mis sous pression par une source extérieure ou par rapprochement de la nappe 11, et, un plateau presseur 13 ayant la surface de ses extrémités inclinée, les contraintes mécaniques générées par la mise en pression de la presse étant contenues par l'enceinte souple sui se positionne naturellement sur le polygone funiculaire des contraintes de traction.

2 - Presse selon la revendication 1 caractérisée en ce qu'elle comporte deux nappes 11, deux transmetteurs d'effort 16, deux générateurs d' effort 17 et deux plateaux presseurs 13.

3 - Presse selon la revendication 2 caractérisée en ce que les deux nappes 11 sont en matière à haute limite élastique tel que feuilles ou chaîne ou câbles d'acier , ou fibres synthétiques ou matériaux composites, et, en ce que les deux nappes 11 sont associées l'une à l'autre par deux dispositifs d'assemblage, eux-mêmes, liés aux nappes 11.

4 - Presse selon la revendication 3 caractérisée en ce que les dispositifs d'assemblage 12 sont liés aux nappes 11 par un procédé qui ne crée pas de perte de résistance aux points de liaison, et, consiste en un collage ainsi que le pinçage mécanique par deux demi coquilles 18 d'une excroissance sur le matériau moulé tel que composite ou nappes de câbles.

5 - Presse selon l'une des revendications 3 ou 4 caractérisée en ce que chaque dispositif d'assemblage 12 comporte une vis à pas contraire agissant sur deux noix qui viennent s'ancrer sur les crochets disposés aux extrémités des nappes 11 constituant les deux éléments de l'enceinte souple.

6 - Presse selon la revendication 5 caractérisée en ce que les extrémités des plateaux presseurs 13 constituent des surfaces d'appui sur lesquelles les dispositifs d'assemblage 12 transmettent aux plateaux 13 les contraintes de compression qui prennent appui sur les extrémités des plateaux 13.

7 - Presse selon l'une des revendications 5 ou 6 caractérisée en ce que les surfaces des extrémités des plateaux sont inclinées entre 50 et 85°, de préférence 75° par rapport au plan des plateaux 13, permettant ainsi le centrage permanent de l'enceinte quel que soit le niveau de dilatation linéaire de ces plateaux.

8 - Presse selon l'une des revendications précédentes caractérisée en ce que les plateaux presseurs 13 sont chauffants, et, en ce qu'elle comporte plusieurs dispositifs d'isolation thermique 14 et 15.

9 - Presse selon la revendication 8 caractérisée en ce que le dispositif d'isolation thermique 14 et 15 utilise une plaque d'isolant 14 associée à une grille 15 qui ménage des couloirs de circulation d'air entre le plateau 13 et le transmetteur 16 dans le sens longitudinal et transversal du fait que les fils longitudinaux et transversaux constituant cette grille sont superposés, diminuant ainsi considérablement les surfaces de transfert de chaleur entre les plateaux 13 et les autres masses de la presse.

10 - Presse selon la revendication 1 caractérisée en ce qu'elle comporte une nappe, un générateur d'effort, un bloc transmetteur d'effort, un plateau presseur et un contre-bloc, la nappe se fixant sur le contre-bloc.

FIG 1

11

17

16

15

14

13

15°

15°

11

13

12

2

FIG 2

11

FIG 3

18

11